# FASCICULE DE BREVET EUROPEEN

(11) **EP 3 345 269 B1**
(45) Date de publication et mention de la délivrance du brevet: **19.02.2020**
(21) Numéro de dépôt: 16763929.3
(22) Date de dépôt: 31.08.2016
(51) Int. Cl.: H02G 3/12

(54) **BOÎTIER A ENCASTER DANS UNE PAROI**
DOSE ZUM EINBAU IN EINE WAND
BOX TO BE MOUNTED IN A WALL

(30) Priorité: 03.09.2015 FR 1558187
(43) Date de publication de la demande: 11.07.2018
(73) Titulaire: Legrand France, 87000 Limoges (FR); Legrand SNC, 87000 Limoges (FR)
(72) Inventeur: MAZIERE, Laurent, 87220 Feytiat (FR); CAILLE, Jean-Loup, 87520 Veyrac (FR); LONGEVILLE, Jérome, 87350 Panazol (FR); CHAUMENY, Jean-Luc, 87590 Saint Just Le Martel (FR)
(74) Mandataire: Jacobacci Coralis Harle
(86) Numéro de dépôt international: PCT/FR2016/052158
(87) Numéro de publication internationale: WO 2017/037385

(56) Documents cités:
- EP-A1- 1 511 144
- EP-A1- 2 882 056
- DE-A1- 2 312 605
- DE-A1- 3 309 346
- FR-A1- 2 339 318
- FR-A1- 2 886 777
- FR-A1- 3 000 309

## Description

### DOMAINE TECHNIQUE AUQUEL SE RAPPORTE L'INVENTION

La présente invention concerne de manière générale l'encastrement d'un module d'appareillage électrique dans une paroi.

Elle concerne plus particulièrement un boîtier à encastrer dans une paroi, qui comporte :
- un élément de boîte comprenant, d'une part, une paroi latérale qui est fermée à l'arrière par un fond et qui délimite un logement intérieur d'accueil d'un module d'appareillage, et, d'autre part, des moyens de fixation à la paroi qui comprennent au moins un volet monté mobile au travers d'une ouverture pratiquée dans la paroi latérale, entre :
   - une position rentrée dans laquelle le volet ne gêne pas l'insertion de l'élément de boîte dans la paroi et dans laquelle au moins une partie interne du volet fait saillie dans le logement intérieur, et
   - une position déployée dans laquelle le volet fait au moins en partie saillie à l'extérieur de la paroi latérale pour bloquer l'élément de boîte dans ladite paroi, et
- un élément de butée, distinct dudit module d'appareillage, adapté à être engagé à l'intérieur de la paroi latérale de l'élément de boîte dans une position dans laquelle il appuie contre ladite partie interne de chaque volet pour forcer chaque volet à se placer en position déployée.

Elle concerne également un ensemble comportant un boîtier tel que précité et un module d'appareillage engagé dans le boîtier.

### ARRIERE-PLAN TECHNOLOGIQUE

Généralement, une boîte d'encastrement à encastrer dans une cloison creuse comporte une paroi latérale fermée à l'arrière par un fond et bordée à l'avant par un épaulement périphérique adapté à s'appuyer contre la face avant de la cloison. Elle comporte également deux griffes qui interviennent en position diamétralement opposée et qui, sous le contrôle de vis, sont aptes à venir s'accrocher à la cloison.

L'un des inconvénients d'une telle boîte d'encastrement est que son installation s'avère fastidieuse, notamment lorsqu'il s'agit de manœuvrer les vis pour faire remonter les griffes le long de la paroi latérale de la boîte jusqu'à ce qu'elles s'accrochent à la cloison. Un autre inconvénient est que ces boîtes sont onéreuses du fait du nombre important d'éléments à fabriquer et à assembler.

Pour remédier à ces inconvénients, on connaît du document FR3000309 de la demanderesse une boîte d'encastrement dépourvue de griffes et de vis, mais qui comporte des volets découpés dans sa paroi latérale. Les extrémités avant de ces volets sont rattachées à la paroi latérale et font office de charnière.

Au repos, ces volets présentent des faces externes situées dans le prolongement de la face externe de la paroi latérale, si bien que lors de l'engagement de cette boîte d'encastrement au travers d'une ouverture pratiquée dans la cloison creuse, ces volets ne forment pas obstacle à cet engagement.

Ces volets présentent en revanche des faces internes qui font saillie à l'intérieur de l'élément de boîte, si bien que lorsqu'un module d'appareillage est rapporté dans l'élément de boîte, ce module appuie sur les volets et il les force à pivoter de telle manière que ces volets se déploient à l'extérieur de la boîte et s'accrochent à la cloison creuse.

Un inconvénient de cette boîte d'encastrement est que, en l'absence du module, la boite n'est pas solidement liée à la cloison creuse, ce qui ne confère pas un sentiment de confiance à l'installateur.

Un autre inconvénient est que, l'épaisseur des panneaux de plâtre de la cloison creuse pouvant varier de 8 mm à 26 mm environ, l'effort nécessité pour insérer le module d'appareillage dans la boîte (en repoussant les volets vers l'extérieur) varie et peut être élevé, ce qui rend plus difficile le travail de l'installateur et demande d'utiliser des matériaux résistants et chers pour fabriquer le module d'appareillage.

On connaît par ailleurs du document EP1511144 une boîte d'encastrement, comportant un anneau de montage équipé de puits de vissage pour la fixation d'un support d'appareillage.

Le document DE3309346 décrit une boîte électrique à monter dans une paroi par l'arrière, qui est équipée à cet effet d'un collier de fixation.

Le document FR2886777 décrit une boîte électrique à engager dans une cloison sèche, comprenant des vis adaptées à manœuvrer des pattes expansibles latéralement pour s'accrocher à la cloison.

Les documents DE2312605 et EP2882056 décrivent des boîtes électriques à monter sur une paroi par l'avant, et qui sont équipées à cet effet d'un collier adapté à venir pincer la paroi pour s'y accrocher.

Le document FR2339318 décrit une boîte électrique équipée d'une bague prévue pour se dilater radialement vers l'extérieur afin de pouvoir fixer la boîte à la paroi.

### OBJET DE L'INVENTION

Afin de remédier aux inconvénients précités de l'état de la technique, la présente invention propose d'utiliser l'élément de boîte autrement.

Plus particulièrement, on propose selon l'invention un boîtier tel que défini dans la revendication 1.

Grâce à l'invention, ce n'est plus le module d'appareillage qui va permettre de bloquer l'élément de boîte dans la paroi, mais plutôt cet élément de butée.

De cette manière, il sera possible de bloquer l'élément de boîte dans la paroi, avant d'y rapporter le module d'appareillage, ce qui donnera confiance à l'installateur.

Le module d'appareillage ne supportant plus les efforts de verrouillage de l'élément de boîte dans la paroi, son installation dans la boîte et son extraction s'en trouvent facilitées, et le coût des matériaux utilisés pour sa fabrication s'en trouve réduit.

On comprend par ailleurs que si l'opération de verrouillage de l'élément de boîte dans la paroi murale au moyen de l'élément de butée reste difficile à mettre en œuvre lorsque la paroi murale est épaisse, cette opération n'a à être effectuée qu'une seule et unique fois. Les opérations d'installation et d'extraction du module d'appareillage, qui sont souvent répétées plusieurs fois, ne seront quant à elles pas affectées par l'épaisseur de la paroi murale. Elles pourront donc être répétées sans effort.

L'appui permet quant à lui de faciliter le positionnement de l'élément de butée dans l'élément de boîte. Il est situé du côté du fond de la boîte, de manière que l'élément de butée se loge le plus au fond de l'élément de boîte et qu'il occupe une place la plus réduite possible. De cette façon, le module d'appareillage pourra disposer d'un grand volume dans l'élément de boîte.

D'autres caractéristiques avantageuses et non limitatives du boîtier conforme à l'invention sont les suivantes :
- ledit élément de butée est creux et est ouvert vers l'avant pour recevoir une partie arrière du module d'appareillage ;
- ledit élément de butée est également ouvert vers l'arrière ;
- ledit élément de butée présente une forme annulaire ;
- ledit élément de butée présente une forme telle que lorsqu'il s'appuie contre ledit appui, il recouvre chaque volet sur une partie seulement de la hauteur de ce volet ;
- la paroi latérale présente des fenêtres pour l'accrochage dudit module d'appareillage, et ledit élément de butée présente une forme telle que lorsqu'il s'appuie contre ledit appui, il laisse accès auxdites fenêtres ;
- ledit appui est formé par le fond de l'élément de boîte ; ou
- ledit appui comporte au moins un ergot qui s'étend en saillie du fond ou de la paroi latérale de l'élément de boîte.

L'invention propose également un ensemble comportant un boîtier tel que précité et un module d'appareillage comportant un socle qui est équipé de moyens de fixation à l'élément de boîte dudit boîtier et qui loge une partie fonctionnelle adaptée à offrir une fonction électrique.

Préférentiellement, le socle du module d'appareillage présente une partie avant qui porte lesdits moyens de fixation à l'élément de boîte, et une partie arrière de section réduite par rapport à la section de ladite partie avant.

Avantageusement, les moyens de fixation du socle du module d'appareillage à l'élément de boîte sont des moyens d'encliquetage.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un ensemble conforme à l'invention, comportant un élément de boîte, un élément de butée et un module d'appareillage ;
- les figures 2, 4 et 6 sont des vues schématiques en coupe illustrant trois étapes du montage de l'ensemble de la figure 1 dans une paroi ;
- les figures 3, 5 et 7 sont respectivement des vues de détail des zones III, V, et VII des figures 2, 4 et 6 ;
- la figure 8 est une vue schématique en perspective d'une variante de réalisation de l'élément de boîte de la figure 1 ;
- la figure 9 est une vue en coupe de l'élément de boîte de la figure 8, représenté en position fixé dans une paroi à l'aide d'un élément de butée ; et
- la figure 10 est une vue de détail de la zone X de la figure 9.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

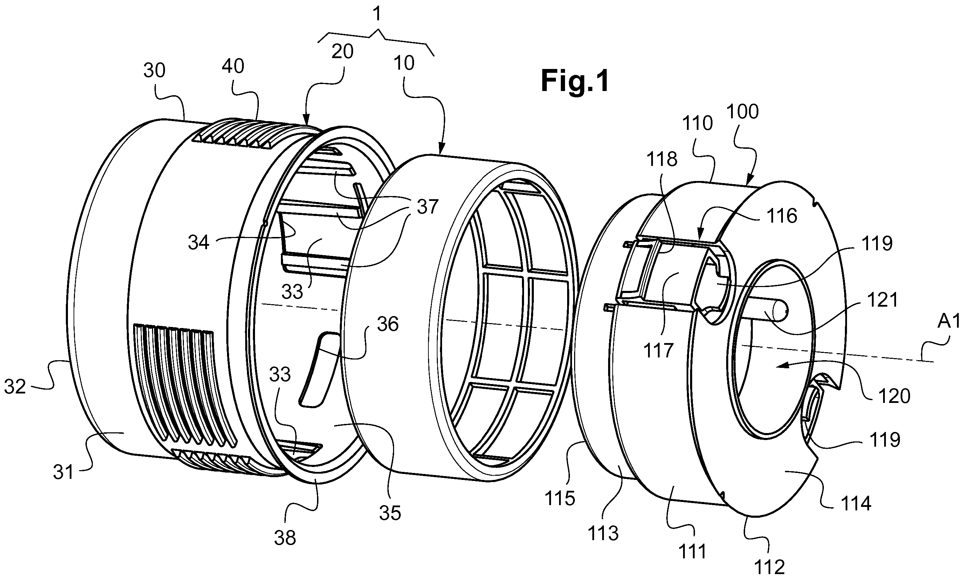

Sur la figure 1, on a représenté un ensemble comportant un boîtier 1 à encastrer dans une cavité pratiquée au préalable dans une paroi murale, et un module d'appareillage 100 à fixer dans le boîtier 1.

Dans la description, les termes « avant » et « arrière » seront utilisés par rapport à la direction du regard de l'installateur de cet ensemble vers la paroi murale. Dans l'exemple représenté sur les figures, l'avant désignera le côté tourné vers l'extérieur de la paroi murale et l'arrière désignera le côté tourné vers l'intérieur de la paroi murale.

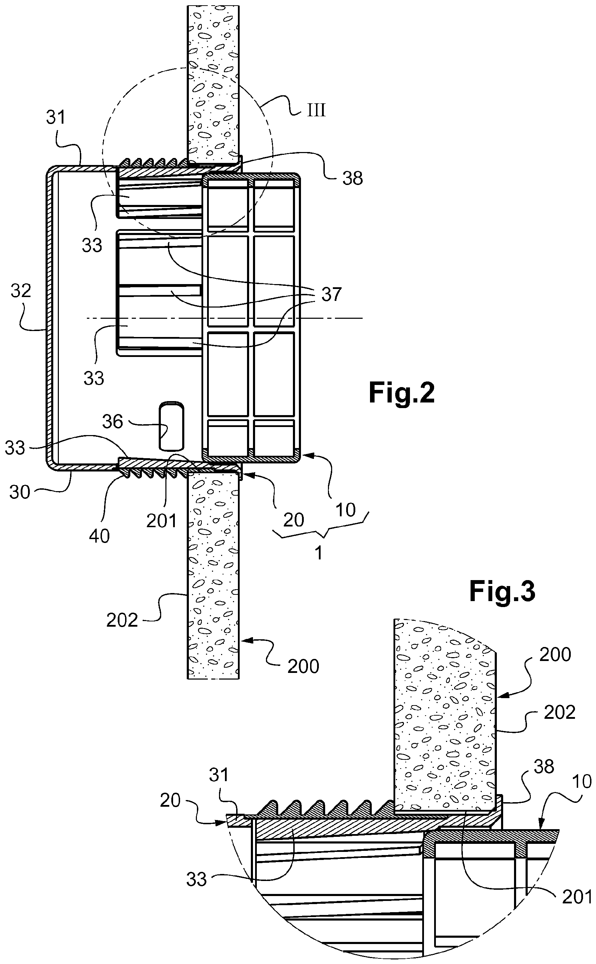

Comme le montre la figure 2, cette paroi murale est ici formée par une cloison creuse 200.

On rappelle à ce sujet que, de manière connue, une telle cloison creuse 200 est généralement composée d'une ossature métallique (formé de montants verticaux et de rails horizontaux non visibles) et de panneaux de plâtre 202 rapportés sur l'une au moins des deux faces de l'ossature métallique.

La cavité pratiquée dans cette cloison creuse pour accueillir le boîtier 1 est alors simplement formée par une ouverture circulaire 201 réalisée à la scie cloche dans l'un des panneaux de plâtre 202.

Tel qu'il apparaît sur la figure 1, le boîtier 1 comporte principalement un élément de boîte 20.

Comme cela sera décrit en détail dans la suite de cet exposé, cet élément de boîte 20 comprend des moyens de fixation à la cloison creuse d'un type particulier. Ces moyens de fixation comprennent en effet au moins un volet 33 monté mobile au travers d'une ouverture 34 pratiquée dans sa paroi latérale 31.

Chaque volet 33 est plus précisément mobile entre :
- une position rentrée dans laquelle la face externe de ce volet 33 s'étend dans le prolongement du reste de la face externe de la paroi latérale 31 de l'élément de boîte 20 et dans laquelle une partie interne 37 de ce volet 33 fait saillie dans le logement intérieur 35, et
- une position déployée dans laquelle le volet 33 fait au moins en partie saillie à l'extérieur de la paroi latérale 31 de l'élément de boîte 20 pour bloquer cette dernière dans la cloison creuse.

Outre cet élément de boîte 20, le boîtier 1 comporte un élément de butée 10 distinct du module d'appareillage 100, qui est prévu pour être entièrement engagé à l'intérieur de l'élément de boîte 20 afin d'appuyer contre la partie interne 37 de chaque volet 33, de telle sorte que chaque volet 33 soit ainsi forcé à se placer en position déployée.

De cette manière, cet élément de butée 10 permet de bloquer l'élément de boîte 20 dans la cloison creuse 1, en position fixe.

Cet élément de butée 10 est distinct du module d'appareillage 100 en ce sens qu'il est dépourvu de composant électrique. Il est ici réalisé d'une seule pièce monobloc, préférentiellement dans une seule et même matière.

Dans le mode de réalisation plus particulièrement représenté sur les figures, l'élément de boîte 20 comprend un corps 30 réalisé dans un matériau plastique rigide (typiquement en polypropylène), qui est partiellement recouvert à l'extérieur par un revêtement souple 40 (typiquement en SEBS - acronyme anglais de «polystyrène-b-polyéthylène-butylène-b-polystyrène »).

Comme le montre bien la figure 1, le corps 30 présente une forme générale cylindrique. Sa paroi latérale 31 est alors tubulaire de révolution autour d'un axe central A1. Elle est fermée à l'arrière par un fond 32 et est ouverte vers l'avant pour délimiter un logement intérieur 35 d'accueil du module d'appareillage 100.

Pour sa fixation dans l'ouverture circulaire 201 pratiquée dans le panneau de plâtre 202, le corps 30 de l'élément de boîte 20 comporte un épaulement extérieur 38 adapté à prendre appui contre la face avant du panneau de plâtre 202. Cet épaulement extérieur 38 forme ici un trottoir périphérique en ce sens qu'il longe extérieurement l'ensemble du bord de l'ouverture avant de la paroi latérale 31 du corps 30, si bien qu'il peut s'appuyer contre la face avant du panneau de plâtre 202, tout autour de l'ouverture circulaire 201. Ainsi, cet épaulement extérieur 38 permet de bloquer le corps 30 de l'élément de boîte 20 vers l'arrière.

Pour le bloquer vers l'avant, les volets 33 sont découpés dans la paroi latérale 31 du corps 30 de l'élément de boîte 20. Il est ici prévu quatre volets 33 de formes rectangulaires. Chaque volet 33 présente trois bords libres et un quatrième bord, à savoir ici le bord avant, qui se raccorde au reste de la paroi latérale 31 du corps 30 de l'élément de boîte 20 par deux pattes formant charnière.

Les volets 33 sont ainsi libres de pivoter au travers d'ouvertures 34 situées dans la paroi latérale 31 du corps 30, entre leur position rentrée et leur position déployée.

Au repos, les volets 33 sont en position rentrée, c'est-à-dire que leurs faces externes sont situées dans le prolongement de la face externe du reste de la paroi latérale 31 du corps 30 de l'élément de boîte 20. Ces volets ne gênent donc pas l'engagement de l'élément de boîte 20 au travers de l'ouverture circulaire 201 pratiquée dans le panneau de plâtre 202 de la cloison creuse 200.

Les parties internes de ces volets 37, qui font saillie à l'intérieur de la paroi latérale 31 du corps 30 lorsque les volets 33 sont en position rentrée, comportent ici trois nervures 37 parallèles, en saillie sur la face intérieure de chaque volet 33. Ici, les épaisseurs de ces nervures 37 croissent depuis l'avant vers l'arrière pour former des rampes.

Ainsi, lorsque l'élément de butée 10 est rapporté dans l'élément de boîte 20, il vient en appui contre ces nervures 37, ce qui permet de déployer les volets 33 en position sortie.

Ici, le revêtement souple 40 est formé par un bandeau qui recouvre l'ensemble du pourtour de la paroi latérale 31 du corps 30 de l'élément de boîte 20, sur une partie de sa hauteur (selon l'axe central A1).

Ce revêtement souple 40 en matériau compressible recouvre notamment les volets 33. Il présente, au niveau de chacun des volets 33, une surépaisseur. Cette surépaisseur est ici formée par des nervures souples parallèles, en saillie sur la face externe de chaque volet 33.

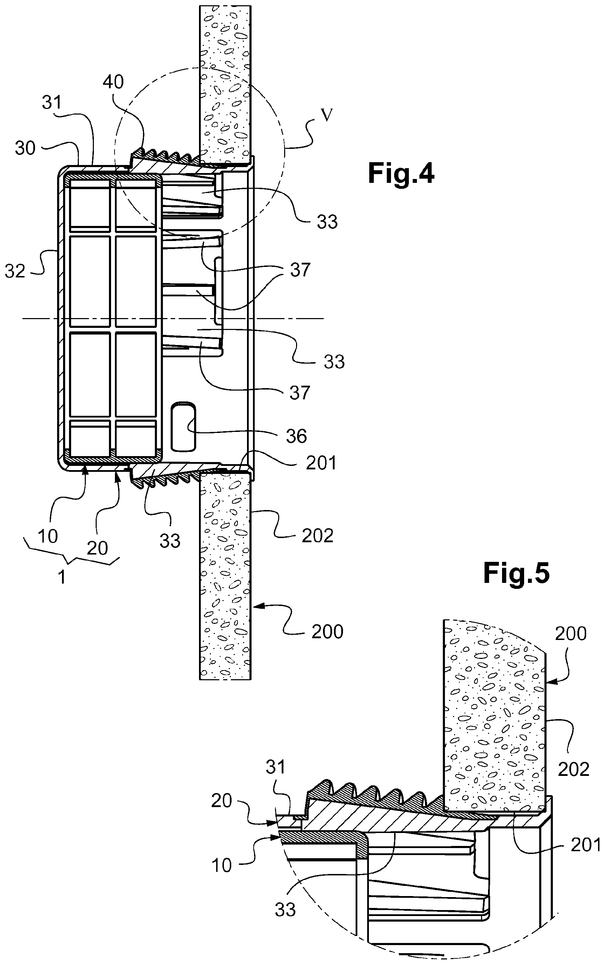

De cette manière, lorsqu'ils se déploient, les volets 33 compriment les nervures souples du revêtement souple 40 contre le bord de l'ouverture circulaire 201 pratiquée dans le panneau de plâtre 202, ce qui permet de fixer l'élément de boîte 20 dans cette ouverture circulaire 201 (voir figures 4 et 5).

On observe sur la figure 1 que la paroi latérale 31 du corps 30 de l'élément de boîte 20 présente par ailleurs des fenêtres 36 qui, comme cela sera expliqué en détail dans la suite, permettront de fixer le module d'appareillage 100.

Il est ici prévu deux fenêtres 36 diamétralement opposées par rapport à l'axe central A1, de formes globalement rectangulaires, qui s'étendent en longueur le long du bord avant de la paroi latérale 31 du corps 30 de l'élément de boîte 20.

La boîte comporte par ailleurs des ouvertures (non visibles sur les figures) pour le passage de conducteurs d'électricité (par exemple pour le passage de trois fils électriques de phase, de neutre et de terre, à connecter au module d'appareillage 100).

Comme le montre encore la figure 1, l'élément de butée 10 est creux et est ouvert vers l'avant ainsi que vers l'arrière, pour recevoir une partie arrière du module d'appareillage 100. Il présente ici une forme annulaire de révolution autour de l'axe central A1.

L'élément de butée 10 comporte plus précisément une paroi latérale pleine en forme de cylindre et, sur la face intérieure de cette paroi latérale, des nervures de rigidification.

De cette manière, l'élément de butée 10 occupe une place réduite dans le logement intérieur 35 délimité par le corps 30 de l'élément de boîte 20. L'espace laissé libre dans l'élément de boîte 20 pour accueillir le module d'appareillage 100 reste alors satisfaisant.

Pour faciliter la mise en place par l'installateur de cet élément de butée 10 à la hauteur souhaitée dans l'élément de boîte 20, il est prévu que le fond 32 du corps 30 de l'élément de boîte 20 forme un appui pour l'élément de butée 10, contre lequel ce dernier est prévu pour venir se placer.

L'élément de butée 10 présente alors une hauteur (selon l'axe central A1) qui est telle que lorsqu'il s'appuie contre ce fond 32, il appuie également contre les nervures 37 des volets 33 de manière à maintenir ces derniers en position déployée.

La paroi latérale 31 de l'élément de boîte 20 présente alors une face interne cylindrique de révolution de manière que l'élément de butée 10 puisse coulisser le long de celle-ci jusqu'à venir en appui contre le fond 32 de l'élément de boîte 20.

Pour limiter l'espace qu'il occupe dans l'élément de boîte 20, cet élément de butée 10 présente une hauteur telle que lorsqu'il s'appuie contre le fond 32 du corps 30 de l'élément de boîte 20, l'élément de butée 10 s'étend sur une partie seulement de la hauteur des volets 33 (voir figure 4).

Dans cette position, pour ne pas gêner l'accrochage du module d'appareillage 100 dans l'élément de boîte 20, l'élément de butée 10 s'étend à l'arrière des fenêtres 36.

Cet élément de butée 10 est réalisé dans un matériau rigide, ici en polypropylène, par moulage d'une seule pièce. Il pourrait également être réalisé en ABS (acronyme de « acrylonitrile butadiène styrène »).

Comme le montre la figure 1, le module d'appareillage 100 est conçu pour offrir aux utilisateurs une fonction électrique particulière.

Tel qu'il est représenté sur les figures, ce module d'appareillage 100 se présente sous la forme d'un bloc « tout en un », adapté à être rapporté directement dans l'élément de boîte 20.

Ce module d'appareillage 100 comporte un socle 110 en matériau isolant. Ce socle 110 comprend une paroi latérale 111, 113 qui est fermée à l'avant par une paroi frontale 114 et qui est fermée à l'arrière par une paroi de fond 115. Le socle 111 délimite ainsi un espace intérieur de réception d'un mécanisme électrique 120.

La paroi frontale 114 de ce socle 110 est bordée par un trottoir périphérique 112 qui est prévu pour venir en appui contre le bord avant de la paroi latérale 31 du corps 30 de la boîte électrique 20.

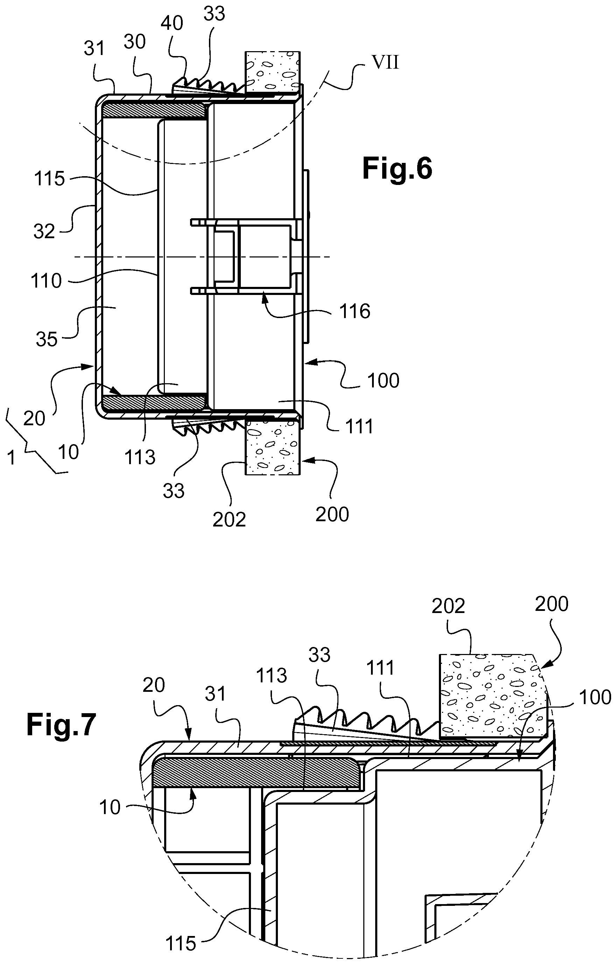

Comme le montre la figure 6, la forme de la paroi latérale du socle 110 est conçue pour être semblable à celle d'une partie avant de l'espace intérieur 35 délimité par l'élément de boîte 20 et par l'élément de butée 10. La forme de ce socle 110 permet ainsi de profiter de l'ensemble du volume intérieur délimité par l'élément de boîte 20 et par l'élément de butée 10.

Ici, la paroi latérale de ce socle 110 présente donc une partie avant 111, de diamètre égal, au jeu de montage près, au diamètre intérieur de la paroi latérale 31 du corps 30 de l'élément de boîte 20, et une partie arrière de diamètre égal, au jeu de montage près, au diamètre intérieur de l'élément de butée 10.

Ainsi, les parties avant 111 et arrière 113 de la paroi latérale de ce socle 110 forment un décroché, de manière à permettre à la partie arrière 113 de la paroi latérale du socle 110 du module d'appareillage 100 de venir s'engager dans l'élément de butée 10.

La partie avant 111 de la paroi latérale de ce socle 110 portent des moyens d'encliquetage 116 permettant de fixer le socle 110 dans l'élément de boîte 20, lorsque son trottoir périphérique 112 s'appuie contre la bord avant du corps 30 de l'élément de boîte 20.

En pratique, ces moyens d'encliquetage 116 comportent deux pattes de flexion 117 qui sont découpées dans la paroi latérale du socle 110 et qui portent chacune sur leurs faces externes une dent d'encliquetage 118.

Les deux pattes de flexion 117 sont situées de manière diamétralement opposée par rapport à l'axe central A1. Chaque patte de flexion 117 présente une forme de rectangle dont trois des bords sont libres et dont le quatrième bord, à savoir ici le bord arrière, se raccorde à la paroi latérale du socle 110 pour former une sorte de charnière.

Chaque dent d'encliquetage 118 est alors située à distance de cette charnière et présente une face avant plane et orthogonale à l'axe central A1, adaptée à s'accrocher au bord de la fenêtre 36 prévue en correspondance dans la paroi latérale 31 du corps 30 de l'élément de boîte 20.

Chaque patte de flexion 117 porte à l'avant une demi-anse 119, qui permet à l'utilisateur de décrocher les dents d'encliquetage 118 des fenêtres 36, afin de permettre au besoin d'extraire le module d'appareillage 100 hors de l'élément de boîte 20.

Le mécanisme électrique 120 logé à l'intérieur du socle 110 du module d'appareillage 100 comporte classiquement une partie fonctionnelle servant à assurer la fonction pour laquelle le module d'appareillage a été conçu, et une partie de connexion servant à assurer sa connexion électrique au réseau électrique local.

On entend par « partie fonctionnelle » une partie qui est adaptée à accomplir une fonction qui va au-delà d'une simple connexion à des conducteurs électriques (cette connexion étant réalisée par la « partie de connexion »).

La partie fonctionnelle présente une forme adaptée à la fonction que le mécanisme électrique doit exécuter.

Il pourra ainsi s'agir d'une fonction d'interaction avec l'usager (typiquement d'une fonction de prise de courant, d'interrupteur, de va-et-vient, de variateur électrique, de prise VDI ou équivalent, de prise réseau, de prise de téléphone), ou d'une fonction d'interaction avec l'environnement (typiquement d'une fonction de voyant, de thermostat, de détecteur de fumée, de détecteur d'inondation, de détecteur de température, de détecteur de mouvement, de détecteur de lumière...).

Il s'agit ici d'une fonction de prise de courant.

La partie fonctionnelle comporte alors une broche de terre 121 qui émerge à l'intérieur d'un puits d'insertion d'une fiche électrique, et deux alvéoles (non visibles) qui sont logées à l'intérieur du socle 110, derrière deux trous prévus au fond du puits d'insertion, et qui sont adaptées à recevoir deux broches de la fiche électrique.

La partie de connexion pourra quant à elle comporter des bornes automatiques ou à vis, permettant de fixer et de connecter les trois fils électriques issus du réseau électrique local à la broche de terre et aux alvéoles précités.

Sur les figures 2, 4 et 6, on a représenté les différentes étapes permettant de monter le module d'appareillage 100 dans la cloison creuse 220 au moyen du boîtier 1.

Préalablement à ce montage, l'installateur réalise à la scie cloche l'ouverture circulaire 201 dans le panneau de plâtre 202 de la cloison creuse 200. Le diamètre de cette ouverture circulaire 201 est choisi pour être supérieur à celui de la paroi latérale 31 du corps 30 de l'élément de boîte 20, mais inférieur au diamètre extérieur du revêtement souple 40 (mesuré au niveau de ses nervures souples).

Après avoir tiré les fils électriques au travers de l'ouverture circulaire 201 pratiquée dans le panneau de plâtre 202, l'installateur engage ces fils électriques dans l'élément de boîte 20, au travers de l'ouverture (non visible) prévue à cet effet dans le fond du corps 30 de l'élément de boîte 20.

Il rapporte ensuite l'élément de boîte 20 dans l'ouverture circulaire 201 en prenant soin que son épaulement extérieur 38 s'applique contre la face avant du panneau de plâtre 202 (voir figures 2 et 3). Grâce au diamètre du revêtement souple 40 et au caractère compressible de ses nervures souples, l'élément de boîte 20 est alors maintenu en position dans l'ouverture circulaire 201 (pour autant qu'aucun effort ne lui soit appliqué).

Pour bloquer fixement l'élément de boîte 20 dans cette position, l'installateur rapporte ensuite l'élément de butée 10 à l'intérieur de l'élément de boîte 20, en appui contre le fond 32 du corps 30 de l'élément de boîte 20 (voir figures 5 et 6). Alors, cet élément de butée 10 vient appuyer contre les nervures 37 des volets 33, de telle manière que ces volets 33 se positionnent automatiquement en position déployée.

Ainsi, le panneau de plâtre 202 se retrouve pincé entre ces volets 33 et l'épaulement extérieur 38 du corps 30 de l'élément de boîte 20.

L'installateur connecte ensuite les fils électriques aux bornes de connexion électrique du module d'appareillage 100, puis il rapporte ce dernier dans l'élément de boîte 20 (voir figures 6 et 7).

Cette opération est réalisée sans effort, puisqu'elle consiste seulement à encliqueter le module d'appareillage dans l'élément de boîte 20.

La présente invention n'est nullement limitée au mode de réalisation décrit et représenté.

Ainsi l'élément de butée pourrait-il présenter une forme différente. Il pourrait à titre d'exemple comporter un fond en forme de disque, et quatre créneaux s'élevant à partir du bord de ce fond de manière à pouvoir appuyer contre les nervures de volets du corps de la boîte électrique.

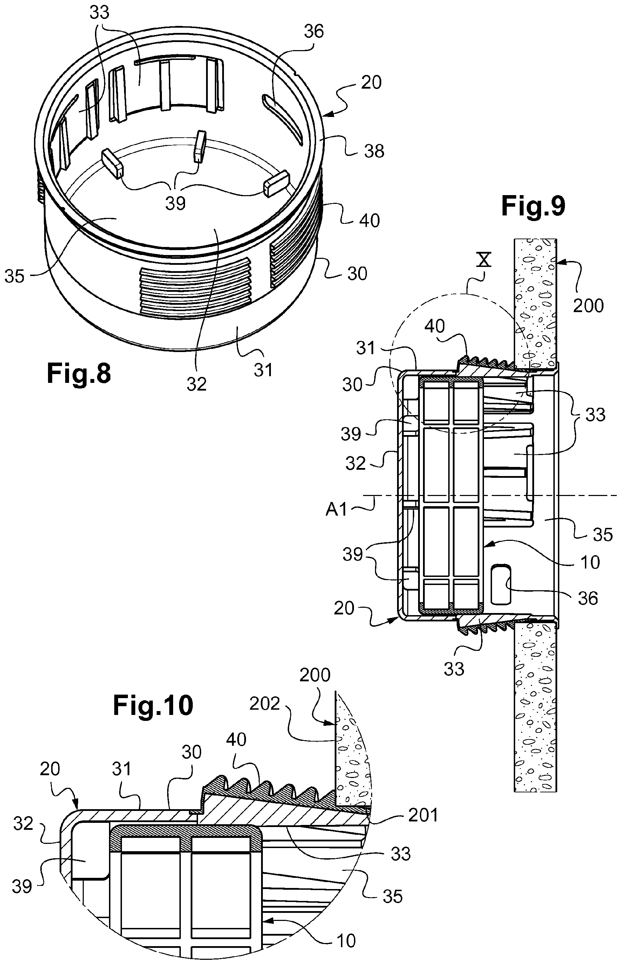

Sur les figures 8 à 10, on a représenté une variante de réalisation du boîtier, dans laquelle l'élément de butée 10 présente une forme identique à celle illustrée sur les figures précédentes et dans laquelle l'élément de boîte 20 se distingue de celui illustré sur les figures précédentes par la seule caractéristique selon laquelle il porte des ergots 39 en saillie dans son logement intérieur 35.

Ici, ces ergots 39 s'étendent en saillie du fond 32 de l'élément de boîte 30, vers l'avant. Ils présentent chacun une forme parallélépipédique. Ils sont au nombre de huit et sont répartis radialement par rapport à l'axe central A1, le long de la paroi latérale 31. Ils forment ensemble un appui contre lequel l'élément de butée 10 peut venir s'appuyer de manière stable. Ils permettent ainsi de former une sorte de butée, facilitant le positionnement de l'élément de butée 10 dans l'élément de boîte 20, à proximité du fond 32.

L'intérêt d'utiliser de tels ergots 39 est de permettre de libérer un espace entre le fond 32 et l'élément de butée 10, lequel espace peut être utilisé par exemple pour introduite dans le boîtier des conducteurs électriques issus du réseau électrique local.

Les ergots 39 pourraient en variante s'étendre à partir de la paroi latérale 31 de l'élément de boîte 20, vers l'intérieur. Ils seront quoi qu'il en soit situés à l'arrière et à distance des bords arrière des volets 33.

## Revendications

1. Boîtier (1) à encastrer dans une paroi (200), qui comporte :
• un élément de boîte (20) comprenant, d'une part, une paroi latérale (31) qui est fermée à l'arrière par un fond (32) et qui délimite un logement intérieur (35) d'accueil d'un module d'appareillage (100), et, d'autre part, des moyens de fixation à la paroi (200) qui comprennent au moins un volet (33) monté mobile au travers d'une ouverture (34) pratiquée dans la paroi latérale (31), entre :
- une position rentrée dans laquelle le volet (33) ne gêne pas l'insertion de l'élément de boîte (20) dans la paroi (200) et dans laquelle au moins une partie interne (37) du volet (33) fait saillie dans le logement intérieur (35), et
- une position déployée dans laquelle le volet (33) fait au moins en partie saillie à l'extérieur de la paroi latérale (31) pour bloquer l'élément de boîte (20) dans ladite paroi (200), et
• un élément de butée (10), distinct dudit module d'appareillage (100), adapté à être engagé à l'intérieur de la paroi latérale (31) de l'élément de boîte (20) dans une position dans laquelle il appuie contre ladite partie interne (37) de chaque volet (33) pour forcer chaque volet (33) à se placer en position déployée,
**caractérisé en ce que** ledit élément de boîte (20) délimite au moins un appui (32 ; 39) formant butée et **en ce que** ledit élément de butée (10) présente une forme et une hauteur telles que lorsqu'il s'appuie contre ledit appui (32 ; 39), il appuie également contre ladite partie interne (37) de chaque volet (33) pour forcer chaque volet (33) à se placer en position déployée.

2. Boîtier (1) selon la revendication précédente, dans lequel ledit élément de butée (10) est creux et est ouvert vers l'avant pour recevoir une partie arrière du module d'appareillage (100).

3. Boîtier (1) selon la revendication précédente, dans lequel ledit élément de butée (10) est également ouvert vers l'arrière.

4. Boîtier (1) selon l'une des revendications précédentes, dans lequel ledit élément de butée (10) présente une forme annulaire.

5. Boîtier (1) selon l'une des revendications précédentes, dans lequel ledit élément de butée (10) présente une forme telle que lorsqu'il s'appuie contre ledit appui (32 ; 39), il recouvre chaque volet (33) sur une partie seulement de la hauteur de ce volet (33).

6. Boîtier (1) selon l'une des revendications précédentes, dans lequel la paroi latérale (31) présente des fenêtres (36) pour l'accrochage dudit module d'appareillage (100), et dans lequel ledit élément de butée (10) présente une forme telle que lorsqu'il s'appuie contre ledit appui (32 ; 39), il laisse accès auxdites fenêtres (36).

7. Boîtier (1) selon l'une des revendications 1 à 6, dans lequel ledit appui est formé par le fond (32) de l'élément de boîte (20).

8. Boîtier (1) selon l'une des revendications 1 à 6, dans lequel ledit appui comporte au moins un ergot (39) qui s'étend en saillie du fond (32) ou de la paroi latérale (31) de l'élément de boîte (20).

9. Ensemble comportant un boîtier (1) selon l'une des revendications précédentes et un module d'appareillage (100) comportant un socle (110) qui est équipé de moyens de fixation (116) à l'élément de boîte (20) dudit boîtier (1) et qui loge une partie fonctionnelle (120) adaptée à offrir une fonction électrique.

10. Ensemble selon la revendication précédente, dans lequel le socle (110) du module d'appareillage (100) présente une partie avant (111) qui porte lesdits moyens de fixation (116) à l'élément de boîte (20), et une partie arrière (113) de section réduite par rapport à la section de ladite partie avant (111).

11. Ensemble selon l'une des revendications 9 ou 10 dans lequel les moyens de fixation (116) du socle (110) du module d'appareillage (100) à l'élément de boîte (20) sont des moyens d'encliquetage.

## Patentansprüche

1. Dose (1) zum Einbau in eine Wand (200), die
• ein Dosenelement (20), das einerseits eine Seitenwand (31), die hinten durch einen Boden (32) geschlossen ist und die einen Innenraum (35) zur Aufnahme eines Gerätemoduls (100) umschließt, und andererseits Mittel zur Befestigung an der Wand (200), die wenigstens einen Flügel (33) aufweisen, der durch eine in der Seitenwand (31) ausgebildete Öffnung (34) zwischen
- einer eingezogenen Stellung, in der der Flügel (33) das Einbringen des Dosenelements (20) in die Wand (200) nicht behindert und in der wenigstens ein innerer Teil (37) des Flügels (33) in den Innenraum (35) ragt, und
- einer ausgefahrenen Stellung, in der der Flügel (33) wenigstens teilweise außerhalb der Seitenwand (31) hervorsteht, um das Dosenelement (20) in der Wand (200) zu blockieren,
beweglich angebracht ist, und
• ein vom Gerätemodul (100) verschiedenes Anschlagselement (10), das dazu ausgelegt ist, im Inneren der Seitenwand (31) des Dosenelements (20) in einer Stellung gehalten zu werden, in der es gegen den inneren Teil (37) jedes Flügels (33) drückt, um jeden Flügel (33) zu zwingen, in die ausgefahrene Stellung zu gehen, aufweist,
**dadurch gekennzeichnet, daß** das Dosenelement (20) wenigstens ein einen Anschlag bildendes Auflager (32; 39) begrenzt und
daß das Anschlagselement (10) eine derartige Form und eine derartige Höhe aufweist, daß es, wenn es gegen das Auflager (32; 39) drückt, auch gegen den inneren Teil (37) jedes Flügels (33) drückt, um jeden Flügel (33) zu zwingen, i die ausgefahrene Stellung zu gehen.

2. Dose (1) gemäß dem vorangehenden Anspruch, bei der das Anschlagselement (10) hohl und nach vorne offen ist, um einen hinteren Teil des Gerätemoduls (100) aufzunehmen.

3. Dose (1) gemäß dem vorangehenden Anspruch, bei der das Anschlagselement (10) auch nach hinten offen ist.

4. Dose (1) gemäß einem der vorangehenden Ansprüche, bei der das Anschlagselement (10) eine Ringform aufweist.

5. Dose (1) gemäß einem der vorangehenden Ansprüche, bei der das Anschlagselement (10) eine derartige Form aufweist, daß es, wenn es gegen das Auflager (32; 39) drückt, jeden Flügel (33) nur auf einem Teil der Höhe des Flügels (33) bedeckt.

6. Dose (1) gemäß einem der vorangehenden Ansprüche, bei der die Seitenwand (31) Fenster (36) zum Einhaken des Gerätemoduls (100) aufweist und bei der das Anschlagselement (10) eine derartige Form aufweist, daß es, wenn es gegen das Auflager (32; 39) drückt, Zugang zu den Fenstern (36) gewährt.

7. Dose (1) gemäß einem der Ansprüche 1 bis 6, bei der das Auflager durch den Boden (32) des Dosenelements (20) gebildet ist.

8. Dose (1) gemäß einem der Ansprüche 1 bis 6, bei der das Auflager wenigstens einen Nocken (39) aufweist, der sich vom Boden (32) oder von der Seitenwand (31) des Dosenelements (20) hervorstehend erstreckt.

9. Einheit, die eine Dose (1) gemäß einem der vorangehenden Ansprüche und ein Gerätemodul (100), das einen Sockel (110) aufweist, der mit Mitteln (116) zum Befestigen am Dosenelement (20) der Dose (1) versehen ist und der einen eine elektrische Funktion bietenden Funktionsteil (120) beinhaltet, aufweist.

10. Einheit gemäß dem vorangehenden Anspruch, bei der der Sockel (110) des Gerätemoduls (100) einen vorderen Teil (111), der die Mittel (116) zum Befestigen am Dosenelement (20) trägt, und einen hinteren Teil (113) mit gegenüber dem vorderen Teil (111) geringerem Querschnitt aufweist.

11. Einheit gemäß einem der Ansprüche 9 oder 10, bei der die Mittel (116) zum Befestigen des Sockels (110) des Gerätemoduls (100) am Dosenelement (20) Einrastmittel sind.

## Claims

1. A box (1) for flush mounting in a wall (200), which box comprises:
• a box element (20) comprising firstly a side wall (31) that is closed at the rear by a rear wall (32) and that defines an internal reception housing (35) for receiving an accessory module (100), and secondly fastener means for fastening to the wall (200), which fastener means comprise at least one flap (33) that is mounted to move through an opening (34) formed in the side wall (31), between:
• a retracted position in which the flap (33) does not hinder insertion of the box element (20) into the wall (200), and in which at least one inner portion (37) of the flap (33) projects into the internal housing (35); and
• a deployed position in which the flap (33) projects, at least in part, out from the side wall (31) so as to block the box element (20) in said wall (200); and
• an abutment element (10) that is distinct from said accessory module (100) and that is adapted to be engaged inside the side wall (31) of the box element (20) in a position in which it bears against said inner portion (37) of each flap (33) so as to force each flap (33) into its deployed position;
the box being **characterized in that** said box element (20) defines at least one abutment-forming stop (32; 39), and **in that** said abutment element (10) presents a shape and a height such that when it bears against said stop (32; 39), it also bears against said inner portion (37) of each flap (33) so as to force each flap (33) into its deployed position.

2. A box (1) according to the preceding claim, wherein said abutment element (10) is hollow and is open towards the front so as to receive a rear portion of the accessory module (100).

3. A box (1) according to the preceding claim, wherein said abutment element (10) is also open towards the rear.

4. A box (1) according to any preceding claim, wherein said abutment element (10) presents a shape that is annular.

5. A box (1) according to any preceding claim, wherein said abutment element (10) presents a shape such that when it bears against said stop (32; 39), it covers each flap (33) over a fraction only of the height of the flap (33) .

6. A box (1) according to any preceding claim, wherein the side wall (31) presents slots (36) for fastening said accessory module (100), and wherein said abutment element (10) presents a shape such that when it bears against said stop (32; 39), it allows access to said slots (36).

7. A box (1) according to any one of claims 1 to 6, wherein said stop is formed by the rear wall (32) of the box element (20).

8. A box (1) according to any one of claims 1 to 6, wherein said stop comprises at least one lug (39) that projects from the rear wall (32) or from the side wall (31) of the box element (20).

9. An assembly comprising both a box (1) according to any preceding claim, and also an accessory module (100) comprising a base (110) that is fitted with fastener means (116) for fastening to the box element (20) of said box (1), and that houses a functional portion (120) that is adapted to offer an electrical function.

10. An assembly according to the preceding claim, wherein the base (110) of the accessory module (100) presents a front portion (111) that carries said fastener means (116) for fastening to the box element (20), and a rear portion (113) of section that is smaller than the section of said front portion (111).

11. An assembly according to claim 9 or claim 10, wherein the fastener means (116) for fastening the base (110) of the accessory module (100) to the box element (20) are snap-fastener means.
